# EUROPÄISCHE PATENTANMELDUNG

(11) **EP 2 355 276 A2**
(43) Veröffentlichungstag der Anmeldung: **10.08.2011**
(21) Anmeldenummer: 11152311.4
(22) Anmeldetag: 27.01.2011
(51) Int. Cl.: H02B 1/30

(54) **Schaltschrank mit Abdeckungen aus Kunststoff**

(30) Priorität: 28.01.2010 DE 102010000243
(71) Anmelder: RITTAL GmbH & Co. KG, 35745 Herborn (DE)
(72) Erfinder: Stedron, Horst, 41564, Kaarst (DE); Eise, Martin, 63679, Schotten (DE)
(74) Vertreter: Tönhardt, Marion

(57) **Zusammenfassung**

Schaltschrank (10) mit einem Rahmengestell (12) bestehend aus einer Mehrzahl von miteinander verbundenen horizontalen Rahmenprofilen (12 a-h) und vertikalen Rahmenprofilen (12 i-I) und daran angebrachten, im Wesentlichen plattenförmigen Abdeckungen (14a,14b;16;18;30),
dadurch gekennzeichnet,
dass die Abdeckungen (14a,14b;16;18;30) aus Kunststoff bestehen und zumindest zwei Kunststofflagen (20a, 20b) aufweisen, die zumindest teilweise miteinander verbunden sind.
Schaltschrank (10) nach Anspruch 1,
dadurch gekennzeichnet,
dass zwischen zumindest zwei der Kunststofflagen (20a,20b) zumindest ein sich parallel zu zumindest einer Begrenzungskante verlaufender Luftführungskanal (22) erstreckt.
Schaltschrank (10) nach Anspruch 2,
dadurch gekennzeichnet,
dass der Luftführungskanal (22) zum Innenraum (11) hin mindestens einen Durchbruch (28) aufweist.

## Beschreibung

Die Erfindung betrifft einen Schaltschrank mit einem Rahmengestell bestehend aus einer Mehrzahl von miteinander verbundenen horizontalen und vertikalen Rahmenprofilen und daran angebrachten, im Wesentlichen plattenförmigen Abdeckungen.

Aus dem Stand der Technik sind derartige Schaltschränke bekannt, bei denen ein im Wesentlichen quaderförmiges Rahmengestell aus Rahmenprofilen aufgebaut ist, die aus Metall gefertigt sind. Die horizontalen Rahmenprofile sind dabei mit den vertikalen Rahmenprofilen über Eckverbinder fest miteinander verbunden. Bei den bekannten Schaltschränken sind an dem Rahmengestell mittels Schraubverbindern vorderseitig mindestens eine an einem der vorderen vertikalen Rahmenprofile anscharnierte Tür, jeweils seitlich links und rechts der Tür eine Seitenwand und rückseitig eine Rückwand angebracht. Die Oberseite des Schaltschranks wird durch ein mittels Schraubverbindern angebrachtes Deckelteil verschlossen. Unterseitig kann ein Sockelteil angebracht sein. Zumindest die Tür bzw. die Türen, die Seitenwände, die Rückwand und das Deckelteil sind bei den bekannten Schaltschränken aus einem Metallblech geformt. Zwar bieten derartige im Wesentlichen plattenförmige Abdeckungen eine gute mechanische Stabilität, weisen jedoch ein relativ hohes Gewicht auf und lassen sich nur mit aufwendigen Maßnahmen mit weiteren Anbauten versehen. Dabei können insbesondere auch Schweißarbeiten notwendig werden. Die Herstellung derartiger plattenförmiger Abdeckungen aus Metallblechen ist darüber hinaus sehr aufwendig.

Es ist nun Aufgabe der Erfindung, einen Schaltschrank anzugeben, der bei reduziertem Gewicht eine einfache Herstellung und gute Ausrüstbarkeit mit weiteren Anbauten ermöglicht.

Diese Aufgabe der Erfindung wird durch einen Schaltschrank gemäß den Merkmalen des Patentanspruchs 1 gelöst. Vorteilhafte Weiterbildungen sind in den Unteransprüchen beschrieben.

Gemäß einem Grundgedenken der Erfindung bestehen die im Wesentlichen plattenförmigen Abdeckungen aus Kunststoff und weisen zumindest zwei Kunststofflagen auf, die zumindest teilweise miteinander verbunden sind. Die Abdeckungen sind demgemäß in Sandwich-Bauweise hergestellt.

Die Kunststofflagen können als Faser-Matrix-Halbzeug aus Sheet Molding Compound (SMC) oder Bulk Molding Compound (BMC) bestehen, die im Heißpressverfahren geformt und miteinander verbunden werden. Alternativ können die Kunststofflagen auch im Spritzgussverfahren oder Extrusionsverfahren hergestellt werden, wobei die zu verbindenden Lagen wiederum heißverpresst bzw. thermogeformt werden. Der verwendete Kunststoff weist ein gegenüber üblicher Weise verwendetem Metallblech ein geringeres spezifisches Teilegewicht auf und ermöglicht durch die vielseitigen Formgebungsmöglichkeiten die einfache Realisation von zusätzlichen Anbauten, wie beispielsweise Luftführungskanälen.

Gemäß einer bevorzugten Ausführungsform kann zwischen zumindest zwei der Kunststofflagen zumindest ein sich parallel zu zumindest einer Begrenzungskante verlaufender Luftführungskanal erstrecken. Ein derartiger Luftführungskanal dient dazu, die durch elektronische Einbauten im Innenraum des Schaltschranks erwärmte Luft nach Außen abzuführen.

Der erfindungsgemäße Lüftungskanal lässt sich auf einfache Weise bei der Herstellung der plattenförmigen Abdeckung als integrierter Bestandteil der plattenförmigen Abdeckung realisieren. Der Lüftungskanal kann bei der Formgebung im Pressverfahren ausbildet werden. Zusätzliche weitere Anbaumaßnahmen sind bei derartigen Luftführungskanälen nicht notwendig.

Um die durch elektronische Einbauten im Innenraum des Schaltschranks erwärmte Luft aufzunehmen, kann der Luftführungskanal zum Innenraum hin mindestens einen Durchbruch aufweisen. Die erwärmte Luft kann dabei durch den Durchbruch hindurch in den Luftführungskanal einströmen und abgeführt werden.

Zusätzlich oder alternativ können mehrere derartige Durchbrüche in dem Luftführungskanal vorgesehen sein, wobei die einzelnen Durchbrüche in gleichen Abständen zueinander angeordnet sein können. Alternativ können die Abstände zwischen den Durchbrüchen durch den Bedarf an abzuführender Wärme bestimmt sein. In Bereichen mit stark erwärmten elektronischen Einbauten können die Durchbrüche voneinander geringer beabstandet sein als in Bereichen, in denen keine oder nur gering erwärmte Luft erzeugt wird. Auch kann die Größe der Durchbrüche je nach abzuführender Wärme variiert werden. So lassen sich einzelne, bereits ausgeformte Durchbrüche beispielsweise ganz oder teilweise abdecken.

Gemäß einem weiteren Grundgedanken kann die im Wesentlichen plattenförmige Abdeckung eine Seitenwand, Rückwand oder Tür bilden und jeweils seitlich an dem Rahmengestell angebracht sein. Der Luftführungskanal kann sich dabei in Richtung vom Boden zur Oberseite hin erstrecken.

Zusätzlich kann die im Wesentlichen plattenförmige Abdeckung ein Deckelteil bilden, welches oberseitig an dem Rahmengestell angrenzend an die seitlich an dem Rahmengestell angebrachten plattenförmigen Abdeckungen angebracht ist. Jeweils ein Luftführungskanal erstreckt sich am Deckelteil von den Luftführungskanälen der seitlich an dem Rahmengestell angebrachten plattenförmigen Abdeckungen bis zu einem nach Außen führenden Durchbruch im Deckelteil.

Dabei besteht zwischen den Luftführungskanälen der seitlich an dem Rahmengestell angebrachten plattenförmigen Abdeckungen und jedem zugeordneten Luftführungskanal des Deckelteils eine Luftströmungsverbindung. Die im Deckelteil ausgeformten Luftführungskanäle nehmen die in den Luftführungskanälen der Seitenwände, der Rückwand oder der Tür geführte, erwärmte Luft aus dem Innenraum des Schaltschrankes auf und transportiert sie zu dem nach Außen führenden Durchbruch im Deckelteil. Hier wird die erwärmte Luft nach Außen abgegeben.

Um eine besonders gute Luftströmungsverbindung zu erreichen können die Luftführungskanäle der seitlich an dem Rahmengestell angebrachten plattenförmigen Abdeckungen nach oben gerichtete Strömungsöffnungen aufweisen. Jeder Luftführungskanal des Deckelteils weist dabei in Richtung auf die zugeordnete Strömungsöffnung eine Anschlussöffnung auf. Das oberseitig auf das Rahmengestell aufgesetzte Deckelteil schließt mit den Anschlussöffnungen seiner Luftführungskanäle an die Strömungsöffnungen der Luftführungskanäle der seitlich an dem Rahmengestell angebrachten plattenförmigen Abdeckungen an.

Um ein einfaches und gerichtetes Abströmen der abzuführenden, erwärmten Innenluft zu erreichen, kann an dem Deckelteil ein einziger nach Außen führender Durchbruch angebracht sein, in welchem die Luftführungskanäle des Deckelteils im Wesentlichen sternförmig münden.

Zur Förderung des Luftstromes in den Luftführungskanälen kann in dem Durchbruch des Deckelteils eine Lüftereinrichtung angeordnet sein, welche eine Luftströmung vom Innenraum durch die Luftführungskanäle nach außen hin erzeugt.

An dem Rahmengestell kann unterseitig ein Sockelteil angebracht sein, welches zumindest eine von Außen in den Innenraum führende Lüftungsöffnung aufweist. Durch die Lüftungsöffnung kann zum Ausgleich der nach außen abgeführten erwärmten Innenluft neue Frischluft in den Innenraum nachströmen.

Die Erfindung wird nachfolgend anhand eines in den Zeichnungen dargestellten Ausführungsbeispiels näher erläutert. Es zeigen:
- Figur 1: in schematischer und perspektivischer Ansicht einen Schaltschrank mit teilweise geöffneter Tür;
- Figur 2: in schematischer und perspektivischer Ansicht das Rahmengestell des in der Figur 1 gezeigten Schaltschranks;
- Figur 3: in schematischer und perspektivischer Explosionsansicht der in der Figur 1 gezeigte Schaltschrank;
- Figur 4: in schematischer und perspektivischer Ansicht eine Seitenwand des in den Figuren 1 und 3 gezeigten Schaltschranks;
- Figur 5: in schematischer und perspektivischer Ansicht das Deckelteil des in den Figuren 1 und 3 gezeigten Schaltschranks;
- Figur 6: in schematischer und perspektivischer Ansicht das Sockelteil des in den Figuren 1 und 3 gezeigten Schaltschranks, und
- Figur 7: in schematischer und perspektivischer Ansicht die Tür des in den Figuren 1 und 3 gezeigten Schaltschranks.

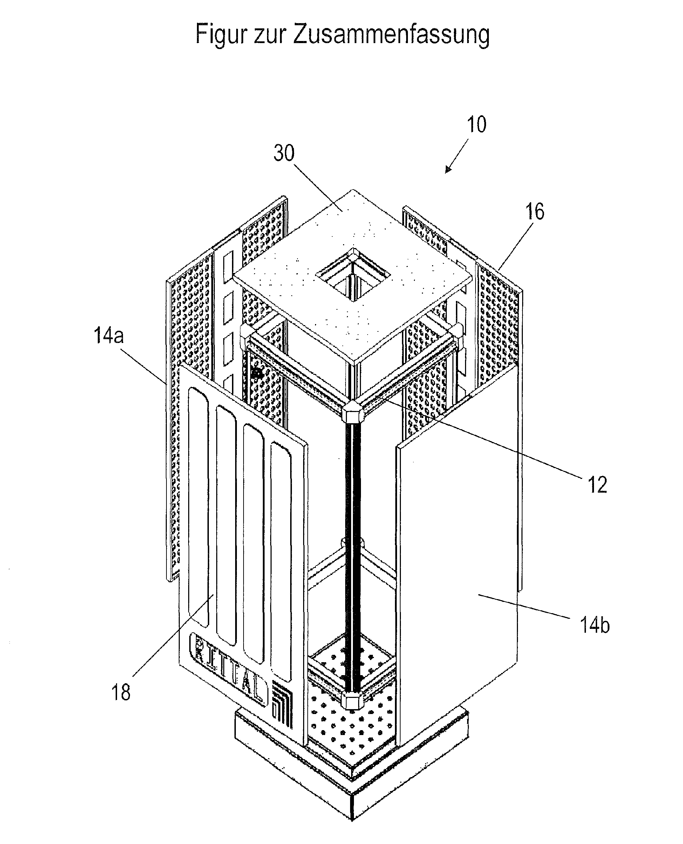

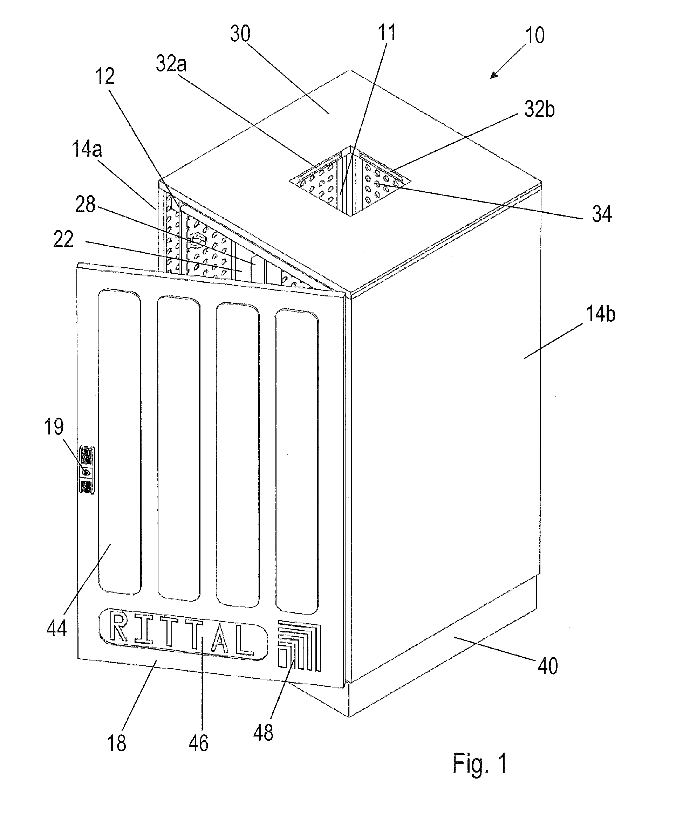

Die Figur 1 zeigt in schematischer und perspektivischer Ansicht einen Schaltschrank 10 mit teilweise geöffneter Tür 18. Der Schaltschrank 10 weist einen im Wesentlichen quaderförmigen Schaltschrankkorpus auf, der innenseitig ein Rahmengestell 12 aufweist. An dem Rahmengestell 12 ist vorderseitig die Tür 18 rechts anscharniert. Am der dem Scharnier gegenüberliegenden linken Randbereich der Tür ist etwa mittig ein Türverschluss 19 mit einem manuell betätigbaren Öffner angebracht.

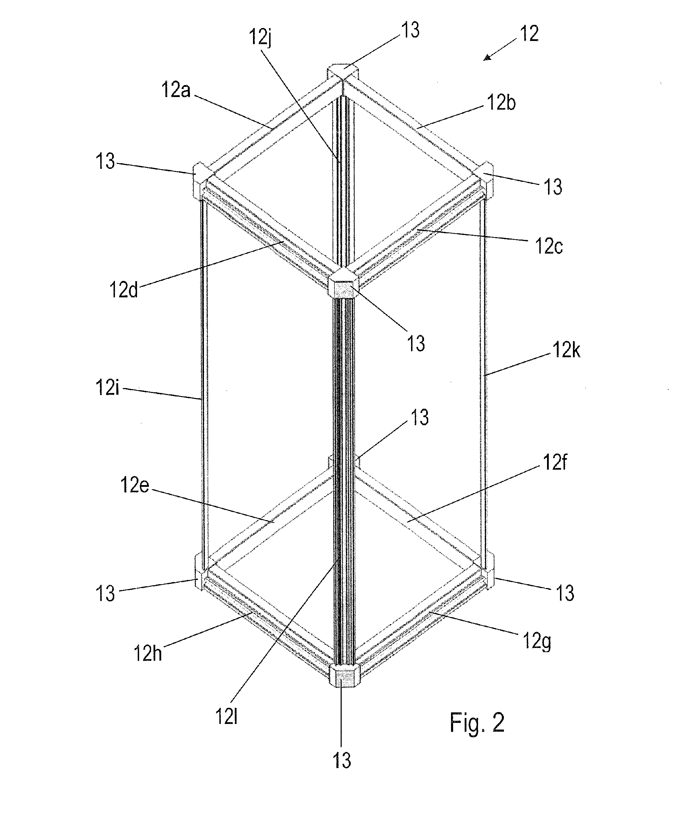

Die Figur 2 zeigt in schematischer und perspektivischer Ansicht das den Schaltschrankkorpus definierende Rahmengestell 12 des in der Figur 1 gezeigten Schaltschranks. Das Rahmengestell 12 ist quaderförmig aufgespannt. Vorderseitig wird der Türrahmen des Schaltschranks 10 durch das vordere untere horizontale Rahmenprofil 12h, die zwei sich hierzu senkrecht nach oben erstreckenden vorderen vertikalen Rahmenprofile 12i und 12l und oberseitig durch das vordere obere horizontale Rahmenprofil 12d gebildet.

Der rückseitige Rahmen des Schaltschranks 10 wird durch das hintere untere horizontale Rahmenprofil 12f, die zwei sich hierzu senkrecht nach oben erstreckenden hinteren vertikalen Rahmenprofile 12k und 12j und oberseitig durch das hintere obere horizontale Rahmenprofil 12b begrenzt. Der vorderseitige Türrahmen und rückseitige Rahmen werden linksseitig des Türrahmens durch das linke untere Rahmenprofil 12e und das linke obere Rahmenprofil 12a und rechtsseitig durch das rechte untere Rahmenprofil 12g und das rechte obere Rahmenprofil 12c verbunden. Die jeweils aneinandergrenzenden Rahmenprofile stehen senkrecht aufeinander und sind jeweils durch Eckverbinder 13 fest miteinander verbunden. Die Rahmenprofile 12a-l können aus Metall, beispielsweise Aluminium oder Stahl, oder aus Kunststoff gefertigt sein.

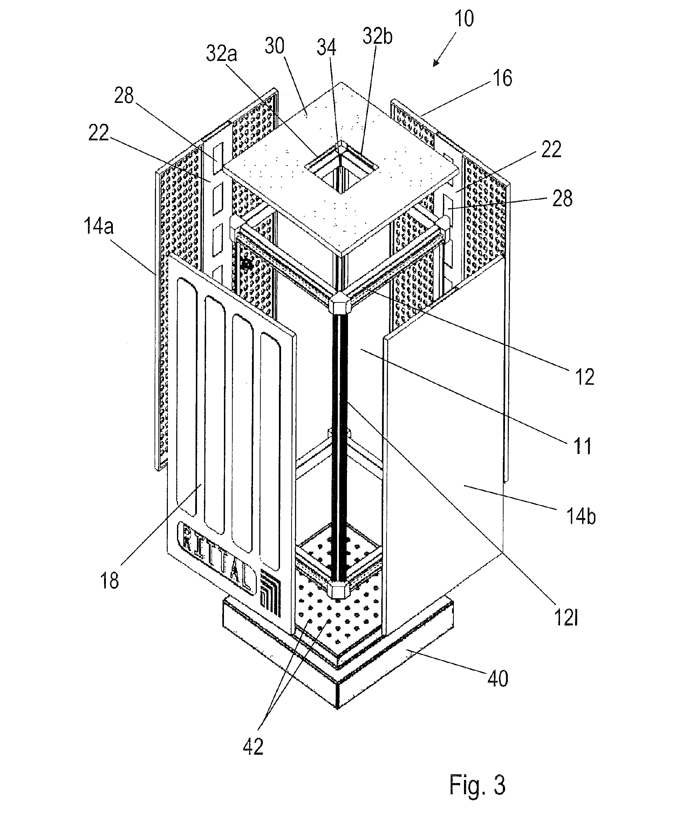

Die Figur 3 zeigt in schematischer und perspektivischer Explosionsansicht den in der Figur 1 gezeigten Schaltschrank. Der Schaltschrank 10 weist das in der Figur 2 gezeigte Rahmengestell 12 auf, an welchem folgende plattenförmige Abdeckungen angebracht sind: Vorderseitig ist die Tür 18 rechts an dem vorderen rechten vertikalen Rahmenprofil 12l anscharniert. Seitlich links der Tür 18 ist eine linke Seitenwand 14a und rechts der Tür 18 ist eine rechte Seitenwand 14b am Rahmengestell 12 angebracht. Rückseitig ist eine Rückwand 16 am rückseitigen Rahmen des Rahmengestells 12 angebracht. Die Oberseite des Schaltschranks ist durch das Deckelteil 30 verschlossen, das an den oberen horizontalen Rahmenprofilen 12a-d angebracht ist.

Unterseitig ist ein Sockelteil 40, mit welchem der Schaltschrank 10 auf dem Boden steht, an dem Rahmengestell 12 angebracht. Die Seitenwände 14a und 14b, die Rückwand 16, das Deckelteil 30 und das Sockelteil 40 sind an dem Rahmengestell durch (nicht gezeigte) Schraubverbinder angebracht.

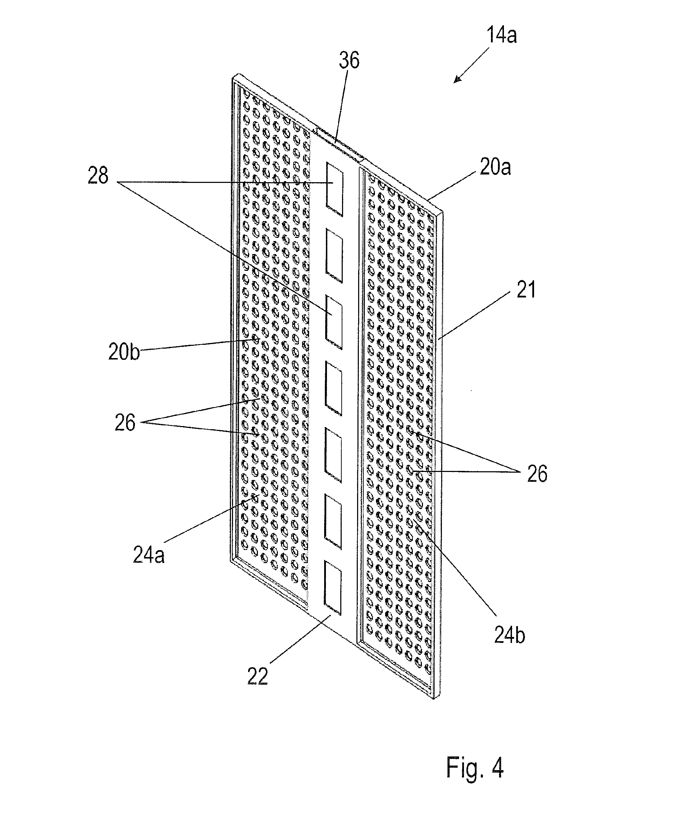

Die Figur 4 zeigt in schematischer und perspektivischer Ansicht die linke Seitenwand 14a des in den Figuren 1 und 3 gezeigten Schaltschranks. Die rechte Seitenwand 14b und die Rückwand 16 des Schaltschranks 10 sind gleich der linken Seitenwand 14a aufgebaut. Auch kann in einer /(nicht gezeigten) alternativen Ausführungsform die Tür 18 gleich der linken Seitenwand 14a aufgebaut sein.

Die linke Seitenwand 14a ist im Wesentlichen als rechteckige, plattenförmige Abdeckung ausgebildet, die aus Kunststoff besteht und zwei Kunststofflagen 20a und 20b aufweist, die miteinander verbunden sind. Die in der Ansicht der Figur 4 vom Betrachter abgewandte äußere Kunststofflage 20a bildet eine ebene Außenseite, die an ihren umlaufenden Kanten einen nach innen abgekanteten, umlaufenden Rand 21 aufweist. Der Rand 21 dient der Versteifung.

In den von dem umlaufenden Rand 21 aufgespannten Raumbereich der äußeren Kunststofflage 20a ist eine zweite, innere Kunststofflage 20b eingelegt und mit der äußere Kunststofflage 20a fest verpresst. Dabei bildet die innere Kunststofflage 20b gegenüber der äußere Kunststofflage 20a einen in der Figur 4 senkrecht vom Boden in Richtung der Oberseite des Schaltschranks 10 in der Mitte zwischen den beiden langen Seiten der linken Seitenwand 14a verlaufenden Luftführungskanal 22. Der Luftführungskanal 22 ist zwischen den beiden Kunststofflagen 20a und 20b ausgebildet und steht gegenüber der an der äußere Kunststofflage 20a angelegten inneren Kunststofflage 20b so weit hervor, wie der umlaufenden Rand 21.

Die innere Kunststofflage 20b weist in den beiden durch den Luftführungskanal 22 gebildeten, an jeweils drei Seiten durch den umlaufenden Rand 21 und an jeweils einer Seite durch den Luftführungskanal 22 begrenzten Bereichen 24a und 24b eine Vielzahl von kleinen, kreisrunden Durchbrüchen/Nieten 26 auf. An der in der Ansicht der Figur 4 von dem Betrachter abgewandten Seite der innere Kunststofflage 20b sind die Durchbrüche 26 von der äußeren Kunststofflage 20a abgedeckt. Dieses Lochraster/Nietraster dient zum einen der Versteifung. Durch das Vorsehen der Durchbrüche 26 wird zum anderen eine Gewichtsersparnis erreicht.

Der Luftführungskanal 22 weist zum Innenraum 11 des Schaltschrankes 10 hin eine Mehrzahl von in gleichen Abständen voneinander beabstandeten Durchbrüchen 28 gleicher Form und Größe auf. Die Durchbrüche verbinden den Innenraum 11 des Schaltschrankes 10 mit dem Innenraum des Luftführungskanals 22. In einer (nicht gezeigten) alternativen Ausführungsform können die Durchbrüche 28 auch in unterschiedlichen Abständen voneinander beabstandet sein. Auch können die Durchbrüche 28 in Form und Größe voneinander abweichen. Außerdem kann auch nur ein einziger Durchbruch 28 in dem Luftführungskanals 22 vorgesehen sein oder bestehende Durchbrüche können durch geeignete (nicht gezeigte) Deckel ganz oder teilweise abgedeckt sein.

Der Luftführungskanal 22 weist eine nach oben gerichtete, schlitzförmige Strömungsöffnung 36 auf, die in dem umlaufenden Rand 21 ausgebildet ist.

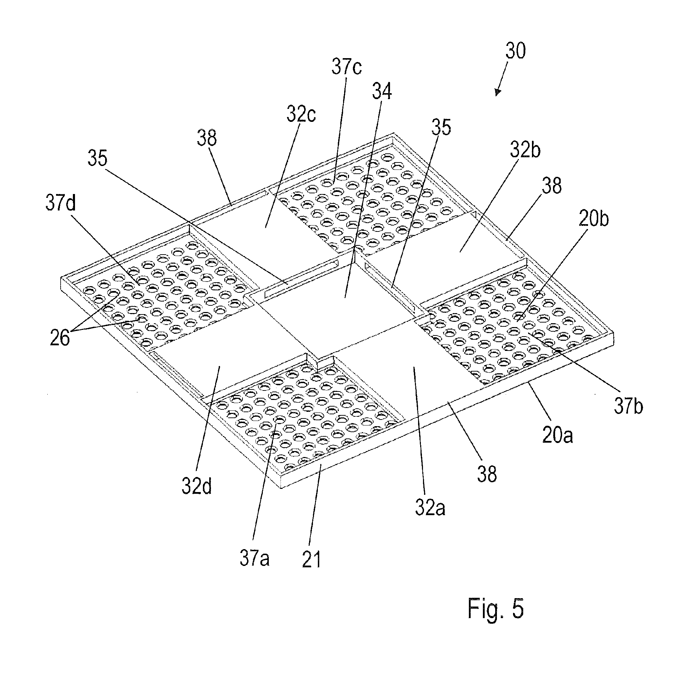

Die Figur 5 zeigt in schematischer und perspektivischer Ansicht das Deckelteil 30 des in den Figuren 1 und 3 gezeigten Schaltschranks. Das Deckelteil 30 ist oberseitig an dem Rahmengestell 12 angrenzend an die seitlich an dem Rahmengestell 12 angebrachten Seitenwände 14a und 14b und die Rückwand 16 angebracht.

Das Deckelteil 30 ist im Wesentlichen als quadratische, plattenförmige Abdeckung ausgebildet, die aus Kunststoff besteht und zwei Kunststofflagen 20a und 20b aufweist, die miteinander verbunden sind. Die in der Ansicht der Figur 5 vom Betrachter abgewandte äußere Kunststofflage 20a bildet eine ebene Außenseite, die an ihren umlaufenden Kanten einen nach innen abgekanteten, umlaufenden Rand 21 aufweist. Der Rand 21 dient der Versteifung.

In den von dem umlaufenden Rand 21 aufgespannten Raumbereich der äußeren Kunststofflage 20a ist eine zweite, innere Kunststofflage 20b eingelegt und mit der äußere Kunststofflage 20a fest verpresst. Dabei bildet die innere Kunststofflage 20b gegenüber der äußere Kunststofflage 20a vier Luftführungskanäle 32a, 32b, 32c und 32d aus, die sich ausgehend vom Randbereich 21 im Wesentlichen sternförmig bis zu einem nach außen führenden Durchbruch 34 im Zentrum des Deckelteils 30 erstrecken und dort in schlitzförmigen Ausströmöffnungen 35 enden. Die Luftführungskanäle 32a, 32b, 32c und 32d sind zwischen den beiden Kunststofflagen 20a und 20b ausgebildet und stehen gegenüber der an der äußere Kunststofflage 20a angelegten inneren Kunststofflage 20b so weit hervor, wie der umlaufenden Rand 21.

Die innere Kunststofflage 20b weist in den vier durch die Luftführungskanäle 32a-d gebildeten, an jeweils zwei Seiten durch den umlaufenden Rand 21 und an jeweils zwei Seiten durch die Luftführungskanäle 32a-d begrenzten Bereichen 37a-d eine Vielzahl von kleinen, kreisrunden Durchbrüchen 26 auf. An der in der Ansicht der Figur 5 von dem Betrachter abgewandten Seite der innere Kunststofflage 20b sind die Durchbrüche 26 von der äußeren Kunststofflage 20a abgedeckt. Dieses Loch-/Nietraster dient zum einen der Versteifung. Durch das Vorsehen der Durchbrüche 26 wird zum anderen eine Gewichtsersparnis erreicht.

Im zusammengebauten Zustand des Schaltschranks 10, wie er beispielsweise aus den Figuren 1 und 3 ersichtlich ist, besteht zwischen den Luftführungskanälen 22 der an dem Rahmengestell 12 angebrachten Seitenwände 14a und 14b und der Rückwand 16 und jedem zugeordneten Luftführungskanal 32 a-c des Deckelteils 30 eine Luftströmungsverbindung. Zu diesem Zweck weisen die Luftführungskanäle 32 a-d des Deckelteils 30 jeweils eine Anschlussöffnung 38 auf, die in Richtung auf die zugeordnete Strömungsöffnungen 36 der Luftführungskanäle 22 der Seitenwände 14a und 14b und der Rückwand 16 ausgerichtet sind und im zusammengebauten Zustand des Schaltschranks 10 mit den Strömungsöffnungen 36 in Kontakt gebracht sind.

In dem Durchbruch 34 des Deckelteils 30 ist eine (nicht gezeigte) Lüftereinrichtung angeordnet, welche eine Strömung der durch (nicht gezeigte) elektronische Einbauten erwärmten Luft vom Innenraum 11 des Schaltschranks 10 durch die Luftführungskanäle 24 der Seitenwände 14a und 14b und der Rückwand 16 und durch die Luftführungskanäle 32 a-d des Deckelteils 30 nach außen hin erzeugt. Die Lüftereinrichtung kann einen Radiallüfter aufweisen, der in bekannter Weise die Luft aus den in dem Durchbruch 34 des Deckelteils 30 mündenden die Luftführungskanälen 32 a-d des Deckelteils 30 nach Außen umlenkt.

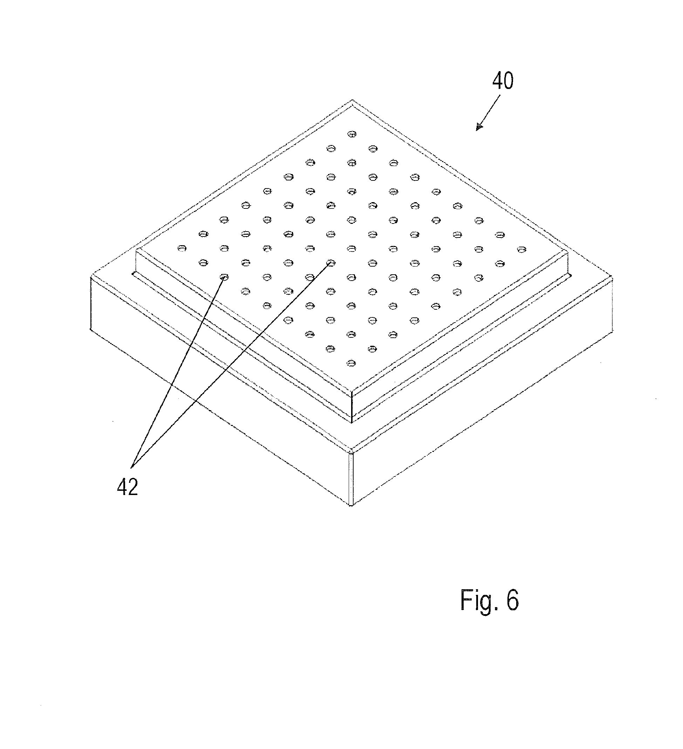

Die Figur 6 zeigt in schematischer und perspektivischer Ansicht ein Sockelteil 40 des in den Figuren 1 und 3 gezeigten Schaltschranks 10. Das Sockelteil 40 ist, wie die Darstellungen der Figuren 1 und 3 zeigen, unterseitig an dem Rahmengestell 12 des Schaltschranks 10 angebracht. Das Sockelteil 40 weist eine Vielzahl von Außen in den Innenraum 11 führenden Lüftungsöffnungen 42 auf. Durch die Lüftungsöffnungen 42 strömt zum Ausgleich der durch die Luftführungskanäle 24 und 32 a-d nach außen abgeführten erwärmten Innenluft neue Frischluft von außen in den Innenraum 11 nach. Das Sockelteil 40 der Figur 6 ist aus Kunststoff, insbesondere als Kunststoffpressteil ausgebildet, kann alternativ jedoch auch aus Metall bestehen.

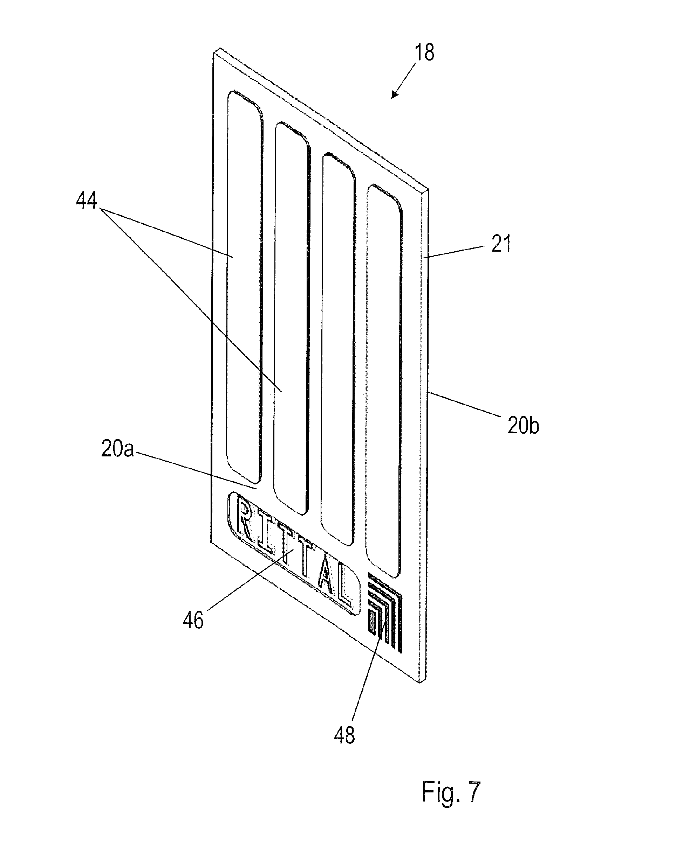

Die Figur 7 zeigt in schematischer und perspektivischer Ansicht die Tür des in den Figuren 1 und 3 gezeigten Schaltschranks. Die Tür 18 ist im Wesentlichen als rechteckiges, plattenförmiges Abdeckung ausgebildet, das aus Kunststoff besteht und zwei Kunststofflagen 20a und 20b aufweist, die miteinander verbunden sind. Die in der Ansicht der Figur 7 dem Betrachter zugewandte äußere Kunststofflage 20a bildet eine Außenseite, die mit einer Mehrzahl von erhabenen Strukturen 44, die der Versteifung dienen, versehen ist. Weiterhin ist im unteren Bereich der Außenseite in der äußeren Kunststofflagen 20a ein vertiefter Schriftzug 46 eingeprägt. Zusätzlich ist auf der äußeren Kunststofflagen 20a rechts neben dem Schriftzug 46 noch ein farbiges Zeichen 48 aufgebracht.

Die äußere Kunststofflage 20a weist an ihren umlaufenden Kanten einen nach innen abgekanteten, umlaufenden Rand 21 auf. Der Rand 21 dient der Versteifung. In den von dem umlaufenden Rand 21 aufgespannten Raumbereich der äußeren Kunststofflage 20a ist eine zweite, innere Kunststofflage 20b eingelegt und mit der äußere Kunststofflage 20a fest verpresst.

Die Tür 18 kann in einer (nicht gezeigten) alternativen Ausführungsform im Wesentlichen gleich der in Figur 4 gezeigten linken Seitenwand 14a aufgebaut sein. Insbesondere kann die Tür 18 auch einen zwischen den beiden Kunststofflagen 20a und 20b ausgebildeten Luftführungskanal 22 mit einer nach oben gerichteten Strömungsöffnung 36 aufweisen, die in geschlossenen Zustand der Tür 18 mit einer Anschlussöffnung 38 eines der die Luftführungskanäle 32 a-d des Deckelteils 30 in Luftströmungskontakt steht.

Der in der Darstellung der Figur 1 gezeigte Türverschluss 19 ist in der Darstellung der Figur 7 ausgelassen. Die Tür gemäß der Figur 7 kann an dem Rahmengestell 12 rechtsseitig oder linksseitig anscharniert sein.

## Patentansprüche

1. Schaltschrank (10) mit einem Rahmengestell (12) bestehend aus einer Mehrzahl von miteinander verbundenen horizontalen Rahmenprofilen (12 a-h) und vertikalen Rahmenprofilen (12 i-l) und daran angebrachten, im Wesentlichen plattenförmigen Abdeckungen (14a, 14b; 16; 18; 30),
**dadurch gekennzeichnet,**
**dass** die Abdeckungen (14a, 14b; 16; 18; 30) aus Kunststoff bestehen und zumindest zwei Kunststofflagen (20a, 20b) aufweisen, die zumindest teilweise miteinander verbunden sind.

2. Schaltschrank (10) nach Anspruch 1,
**dadurch gekennzeichnet,**
**dass** zwischen zumindest zwei der Kunststofflagen (20a, 20b) zumindest ein sich parallel zu zumindest einer Begrenzungskante verlaufender Luftführungskanal (22) erstreckt.

3. Schaltschrank (10) nach Anspruch 2,
**dadurch gekennzeichnet,**
**dass** der Luftführungskanal (22) zum Innenraum (11) hin mindestens einen Durchbruch (28) aufweist.

4. Schaltschrank (10) nach Anspruch 2 oder 3,
**dadurch gekennzeichnet,**
**dass** die im Wesentlichen plattenförmige Abdeckung eine Seitenwand (14a, 14b), Rückwand (16) oder Tür (18) bildet und jeweils seitlich an dem Rahmengestell (12) angebracht ist, wobei sich der Luftführungskanal (22) in Richtung vom Boden zur Oberseite hin erstreckt.

5. Schaltschrank (10) nach Anspruch 4,
**dadurch gekennzeichnet,**
**dass** das im Wesentlichen plattenförmige Abdeckung ein Deckelteil (30) bildet, welches oberseitig an dem Rahmengestell (12) angrenzend an die seitlich an dem Rahmengestell (12) angebrachten plattenförmigen Abdeckungen (14a, 14b; 16; 18) angebracht ist, wobei sich von den Luftführungskanälen (22) der seitlich an dem Rahmengestell (12) angebrachten plattenförmigen Abdeckungen (14a, 14b; 16; 18) jeweils ein Luftführungskanal (32 a-d) bis zu einem nach Außen führenden Durchbruch (34) im Deckelteils erstreckt, wobei zwischen den Luftführungskanälen (22) der seitlich an dem Rahmengestell (12) angebrachten plattenförmigen Abdeckungen (14a, 14b; 16; 18) und jedem zugeordneten Luftführungskanal (32 a-d) des Deckelteils (30) eine Luftströmungsverbindung besteht.

6. Schaltschrank (10) nach Anspruch 5,
**dadurch gekennzeichnet,**
**dass** die Luftführungskanäle (22) der seitlich an dem Rahmengestell (12) angebrachten plattenförmigen Abdeckungen (14a, 14b; 16; 18) nach oben gerichtete Strömungsöffnungen (36) aufweisen und jeder Luftführungskanal (32 a-d) des Deckelteils (30) in Richtung auf die zugeordnete Strömungsöffnung (36) eine Anschlussöffnung (38) aufweist.

7. Schaltschrank (10) nach Anspruch 5 oder 6,
**dadurch gekennzeichnet,**
**dass** an dem Deckelteil (30) ein einziger nach Außen führenden Durchbruch (34) angebracht ist, in welchem die Luftführungskanäle (32 a-d) des Deckelteils (30) im Wesentlichen sternförmig münden.

8. Schaltschrank (10) nach Anspruch 7,
**dadurch gekennzeichnet,**
**dass** in dem Durchbruch (34) des Deckelteils (30) eine Lüftereinrichtung angeordnet ist, welche eine Luftströmung vom Innenraum (11) durch die Luftführungskanäle nach außen hin erzeugt.

9. Schaltschrank (10) nach einem der Ansprüche 1 bis 8,
**dadurch gekennzeichnet,**
**dass** an dem Rahmengestell (12) unterseitig ein Sockelteil (40) angebracht ist, welches zumindest eine von Außen in den Innenraum (11) führende Lüftungsöffnung (42) aufweist.
